## Europäisches Patentamt

## European Patent Office

## Office européen des brevets

(11) Publication number: **0 241 097**
**B1**

# EUROPEAN PATENT SPECIFICATION

(45) Date of publication of patent specification: **13.06.90**

(21) Application number: **87200660.6**

(22) Date of filing: **07.04.87**

(51) Int. Cl.⁵: **A 23 K 1/08, A 23 K 1/18, A 23 C 11/04**

(54) Liquid food product on dairy basis for cats and a process for the preparation of these products.

(30) Priority: **07.04.86 NL 8600874**

(43) Date of publication of application:
**14.10.87 Bulletin 87/42**

(45) Publication of the grant of the patent:
**13.06.90 Bulletin 90/24**

(84) Designated Contracting States:
**AT BE CH DE ES FR GB GR IT LI LU NL SE**

(56) References cited:
**CH-A- 632 903**
**CH-A- 635 730**
**DE-A-3 235 137**
**DE-A-3 327 963**
**FR-A-1 551 098**
**GB-A-2 170 984**
**US-A-2 168 724**
**US-A-2 465 905**

**Handbuch der LM-CHEMIE III/1 S. 409,431,489**
**Yoghurt Rasic-Kurmann S.100, 101, 102**

(73) Proprietor: **Coöperatieve Condensfabriek "FRIESLAND" W.A.**
**Pieter Stuyvesantweg 1**
**NL-8937 AC Leeuwarden (NL)**

(72) Inventor: **Van der Leij, Jan**
**Klaas van der Meijstraat 6**
**NL-9045 PZ Beetgumermolen (NL)**

(74) Representative: **Schut, Willem Jan et al**
**Octrooibureau Vriesendorp & Gaade P.O.Box 266**
**NL-2501 AW Den Haag (NL)**

## Description

The invention relates to a liquid food product on dairy basis for cats and to concentrated liquid products intended for dilution to such a liquid food product, as well as processes for preparing these products.

It is common knowledge that cats like milk, but that this may give digestion problems due to the relatively high lactose content of cow's milk (approximately 4.6% by weight). These problems can be eliminated by diluting the milk with water prior to consumption, however, this has the disadvantage that also the positive food components, i.e. proteins, are being diluted and consequently that the cat will absorb these components to an inadequate extent.

A milk product for cats based on the dilution principle is known from Swiss patent specification 632 903. With the maximum indicated water-addition of 30% the lactose content would be fairly acceptable; the protein content and the other food components content would, however, be too low. In a smaller dilution, however, the disadvantage of a too high lactose content would remain. FR—A—1551089 and DE—A—3327363 describe liquid food products on dairy basis with a low lactose content. An incorporation of fats having a high content of polyunsaturated fatty acids is not disclosed.

A new liquid food product for cats missing these drawbacks has been found, which product has in addition the advantage that by using it the animals' health and appearance are beneficially affected.

This new, liquid food product according to the invention is characterized by the fact that this product comprises 1.5—3.5% by weight of lactose and 3.5—5.0% by weight of protein, based on the total product, and fat. Preferably the lactose content of this product ranges between 2.0 and 3.0% by weight.

The food product according to the invention comprises an amount of protein that is at least equal to that of cow's milk (approximately 3.5% by weight); a protein content higher than 5% by weight, however, is meaningless. The protein may consist of milk protein originating from skimmed milk, or partially skimmed milk or skimmed or partially skimmed milk powder, combined or not combined with whey-protein (e.g. originating from delactosed, either or not desalted whey or a whey-protein concentrate obtained by ultrafiltration) and/or calcium- or sodium caseinate; preferably the protein consists of casein, caseinate and/or whey-protein.

For the cat's health care, and particularly to prevent skin diseases and to promote the gloss of the fur, it is recommended that the fat contains a high content of polyunsaturated fatty acids, preferably at least 40% by weight. Suitable fats are for example corn oil, sun flower oil, soy bean oil, etc. The most beneficial results are obtained in case the total fat content of the product ranges from 1—3% by weight.

It is common knowledge that cats are frequently troubled by skin diseases and that so-called complete dry foods cannot prevent these skin diseases to a sufficient extent, as the incorporation of fats having a high content of polyunsaturated fatty acids in these dry foods is not possible in connection with preservation problems (oxidative rancidity). The food product according to the invention is therefore not only a treat for the cat, but also contributes to the animal's health.

Furthermore it is recommended to incorporate in the food products according to the invention vitamins, minerals, flavours and fillers. The vitamins and minerals to be applied and the proportions thereof have to correspond with the cats' needs as known from literature. The preferably applied fillers serve as calorie source. Preferably a carbohydrate highly digestible for the cat is chosen therefore, such as hydrolyzed or not hydrolyzed or modified or not modified starch.

An appropriate hydrolyzed starch is for example maltodextrine. An appropriate quantity of filler ranges between 2 and 6% by weight, preferably between 3 and 5% by weight.

Preferably a small amount of yeast extract is included in the food product. This does not only provide a flavour to the product that is pleasant for the cat, but moreover, it provides a real contribution to the vitamin content, particularly B-vitamins.

In addition synthetic flavours may be included such as meat- or fish-flavour.

The invention also covers liquid products which are fermented by means of lactic acid bacteria, e.g. strains of the types *Lactobacillus bulgaricus, Streptococcus thermophilus* or *Streptococcus acidophilus* or mixtures thereof up to a pH lower than 5.

The invention also encompasses concentrated liquid products providing one of the above described liquid food products on dairy basis for cats after dilution with water.

The liquid food products according to the invention can be brought on the market in a sterilized or pasteurized form. Therefore the products are either brought into the final container after pasteurisation, or brought into the final container after aseptical sterilisation, or after bringing into the final container the products are sterilized in said container.

The final container may be for example tins, bottles and cartons.

The liquid food products according to the invention may be prepared in the following three ways:

### Process 1

Skimmed milk or partially skimmed milk or a mixture thereof with delactosed, desalted or not desalted whey is diluted with water to the desired lactose content. Subsequently by means of caseinate the protein percentage is brought at the required content. Thereafter the fat phase, vitamins, minerals, fillers and flavours can be added to the mixture. The total mixture is homogenized with a high-pressure homogeniser at a temperature of e.g. 60°C.

After cooling the food product is filled up into a tin package, thereafter the filled and sealed tin is sterilized or pasteurized. Also the food product may be filled up into bottles, said filled-up bottles being sterilized or pasteurized.

After homogenisation and cooling the food product may also be UHT-sterilized by means of a flow steriliser under the time-temperature conditions known for dairy products. Thereafter or after buffering in a sterile tank it is filled up aseptically into carton packages.

If a limited storage life is sufficient, pasteurisation of the food product prior to filling-up into the final package will suffice. For this the above mentioned packages can be used again.

### Process 2

The required proportions of milk powder and/or delactosed, desalted or non desalted whey powder or whey-protein-concentrate obtained by ultrafiltration are added to water and subsequently dissolved therein, in order to adjust the required lactose content.

Thereafter caseinate is added to this mixture, in order to obtain the predetermined protein content.

Subsequently the other ingredients, such as mentioned under Process 1, are added, thereafter the mixture is homogenized and cooled as described in Process 1.

The food product obtained according to this process can be packaged and preserved in the same ways as described in Process 1.

In the two processes the quantity of water can be chosen in such a manner that the obtained food product is either directly ready for consumption or must be diluted with a quantity of water before consumption.

### Process 3

The liquid product obtained according to Process 1 or 2 is homogenized in the manner as described in Process 1 and cooled to 30°—45°C, dependent on the available process time. The dairy product obtained in this manner is fermented with lactic acid bacteria, e.g. *Lactobacillus bulgaricus, Streptococcus thermophilus* or *Streptococcus acidophilus*, up to a pH of 3.5—5.0 and preferably up to a pH of 4.2. After fermentation the obtained dairy product is stirred and filled-up in the manners as described in Process 1.

The food products and the said processes are elucidated in details in the following examples. The registered Trade marks as used in the following are acknowledged as such.

### Example 1

A mixture is prepared of 6.2% by weight of concentrated skimmed milk (32% dm) and 2.9% by weight of concentrated partially delactosed whey (dm 32%) and this mixture is diluted with water up to 85% by weight.

Subsequently to this mixture 2.8% by weight of calcium caseinate, 2.0% by weight of corn oil, 5.0% by weight of maltodextrine (e.g. type Paselli SPG 20 of Avebe), 0.3% by weight of yeast extract (e.g. type Gistex of Gist-Brocades), 0.014% by weight of a mixture of vitamins and minerals (containing the vitamins A, $B_1$, $B_2$, $B_6$, C, $D_3$, E, niacine, choline and calcium panthotenate among others) and a flavour (e.g. type tuna fish 2 m 43403 of Naarden International) are added.

The whole mixture is completed with water up to 100% by weight, homogenized with a pressure of 2 × 300 bars at 50°C and cooled.

The obtained product is sterilized in a flow steriliser at 140°C for 5 seconds and aseptically filled up into carton packages.

### Example 2

A solution is made of 3.2% by weight of skimmed milk powder and 3.2% by weight of partially delactosed whey powder in 70% by weight of water. To the resulting solution 2.3% by weight of sodium caseinate, 2.0% by weight of corn oil, 4.0% by weight of maltodextrine, 0.3% by weight of yeast extract, 0.014% by weight of a mixture of vitamins and minerals and a flavour (e.g. type beef 2 m 36174 of Naarden International) are added.

The whole mixture is completed with water up to 100% by weight, homogenized with a pressure of 2 × 250 bars at 60°C and after cooling the product is filled up into glass bottles which are subsequently sterilized in a continuous bottle-steriliser at 115°C for 15 minutes.

### Example 3

The composition and preparation are as described in Example 2, with the proviso that 5.0% by weight of whey protein concentrated powder (60% by weight of protein/dry material) obtained by ultrafiltration, is applied instead of the milk powder and the delactosed whey powder and that 2.2% by weight of sodium caseinate, 2.0% by weight of maltodextrine and 0.6% by weight of yeast extract is applied and that after pasteurisation in a flow pasteurizer (75°C for 10 seconds) the product is filled up into carton packages.

Example 4

Water is used for diluting 33% by weight of skimmed milk up to 70% by weight.

Subsequently 2.8% by weight of partially delactosed whey powder, 2.5% by weight of sodium caseinate, 2.0% by weight of corn oil, 3.0% by weight of starch (e.g. Snowflake 12616 and 06309), 0.3% by weight of yeast extract, 0.014% by weight of a mixture of vitamins and minerals, and a flavour, are added thereto.

The obtained mixture is completed with water up to 100% by weight, homogenized with a pressure of 2 × 250 bars at 60°C, cooled and filled up into tins. The filled tins are sterilized in a continuous tin-steriliser at 125°C for 10 minutes.

This product has a more viscous character than the products of examples 1 up to and including 3.

Example 5

A product is prepared according to example 4. After homogenisation the obtained product is inoculated with 0.025% by weight of a bacteria culture of *Lactobacillus bulgaricus* and *Streptococcus thermophilus* (1:1) at 42°C. After fermentation to pH 4.2 at 42°C, the product is cooled and then filled up and preserved as described in example 4.

On account of the fermentation the lactose content in the final product is about 30% lower than in example 4.

Example 6

A solution is made of 4.1% by weight of skimmed milk powder and 4.1% by weight of whole milk powder (28% by weight of milk fat) in 70% by weight of water.

Thereafter 5.0% by weight of sodium caseinate, 3.0% by weight of sunflower oil, 5.2% by weight of maltodextrine 0.6% by weight of yeast extract, 0.028% by weight of a mixture of minerals and vitamins (vide example 1) and a flavour are added to this solution (vide example 2).

The whole mixture is completed with water up to 100% by weight.

The said product is further processed according to Process 2, with the proviso that the mixture is homogenized with a pressure of 2 × 250 bars at 50°C, after cooling the product is filled up into tins and sterilisation takes place as described in example 4.

# EP 0 241 097 B1

Prior to use, this product should be diluted by mixing 1 part of food product with 1 part of water. The examples are summarized in the following table:

| Example | 1 | 2 | 3 | 4 | 5 | 6 |
|---|---|---|---|---|---|---|
| Partially delactosed whey powder | | 3.2 | | 2.8 | 2.8 | |
| condensed, partially delactosed whey | 2.9 | | | | | |
| UF concentrate powder 60% protein/dry material) | | | 5.0 | | | |
| Skimmed milk | | | | 33.0 | 33.0 | |
| condensed skimmed milk | 6.2 | | | | | |
| skimmed milk powder | | 3.2 | | | | 4.1 |
| whole milk powder | | | | | | 4.1 |
| filler:maltodextrine | 5.9 | 4.0 | 2.0 | | | 5.2 |
| starch | | | | 3.0 | 3.0 | |
| fat:   corn oil | 2.0 | 2.0 | 2.0 | 2.0 | 2.0 | |
| sun flower oil | | | | | | 3.0 |
| sodium caseinate | | 2.3 | 2.2 | 2.5 | 2.5 | 5.0 |
| calcium caseinate | 2.8 | | | | | |
| yeast extract | 0.3 | 0.3 | 0.6 | 0.3 | 0.3 | 0.6 |
| added water | 79.9 | 85.0 | 88.2 | 56.4 | 56.4 | 78.0 |
| mixture of vitamins and minerals | 0.014 | 0.014 | 0.014 | 0.014 | 0.014 | 0.028 |
| fat % | 2.0 | 2.0 | 2.0 | 2.0 | 2.0 | 4.1 |
| lactose % | 1.6 | 3.5 | 1.5 | 3.0 | 2.0 | 3.6 |
| protein % | 3.5 | 4.0 | 5.0 | 4.0 | 4.0 | 7.0 |
| dry material content | 13.4 | 14.4 | 11.2 | 13.0 | 13.0 | 21.1 |

**Claims**

1. A liquid food product on dairy basis for cats, characterized in that the product comprises 1.5—3.5% by weight of lactose and 3.5—5.0% by weight of protein based on the total product and fats which comprise at least 40% by weight of poly-unsaturated fatty acids.

2. Liquid food product according to claim 1, characterized in that the lactose content of this product ranges between 2.0 and 3.0% by weight.

3. Liquid food product according to any one of the preceding claims, characterized in that the protein consists of casein, caseinate and/or whey-proteins.

4. Liquid food product according to any one of the preceding claims, characterized in that this product also comprises vitamins, minerals, flavours and/or fillers.

5. Liquid food product according to any one of the preceding claims, characterized in that the product is fermented by means of a lactic acid bacteria culture up to a pH of 3.5—5.0.

6. Concentrated liquid product comprising fats containing at least 40% by weight of polyunsaturated fatty acids and lactose and protein in a weight ratio ranging between 0.3 and 1.0, characterized in that a liquid food product according to any of the claims 1—5 is obtained by dilution of said concentrated liquid product.

7. A process for preparing a liquid food product according to one of the preceding claims, characterized

5

in that one or more liquid milk- and/or whey products are diluted with water up to the desired lactose content, subsequently caseinates are added until the desired protein content is obtained, the other ingredients such as fats, fillers, nutrients and flavours are added, the resulting mixture is homogenized and is filled up in a manner usual for milk products and sterilized, optionally after fermentation with lactic acid bacteria.

8. A process for preparing a liquid food product according to one of the claims 1—6, characterized in that one or more powdered milk- and/or whey products are dissolved in water to the desired lactose content, subsequently caseinates are added until the desired protein content is obtained, the other ingredients such as fats, fillers, nutrients and flavours are added, the resulting mixture is homogenized and is filled up in a manner usual for milk products and sterilized, optionally after fermentation with lactic bacteria.

## Patentansprüche

1. Flüssiges nahrungsmittelprodukt auf Molkereibasis für Katzen, dadurch gekennzeichnet, daß es 1,5—3,5 Gew.-% Lactose und 3,5—5,0 Gew.-% Protein, bezogen auf das Gesamtprodukt, sowie Fette mit mindestens 40 Gew.-% an mehrfach ungesättigten Fettsäuren enthält.

2. Flüssiges Nahrungsmittelprodukt nach Anspruch 1, dadurch gekennzeichnet, daß der Lactosegehalt zwischen 2,0 und 3,0 Gew.-% liegt.

3. Flüssiges Nahrungsmittelprodukt nach einem der vorhergehenden Ansprüche, dadurch gekennzeichnet, daß das Protein aus Casein, Caseinat und/oder Molkenproteinen besteht.

4. Flüssiges Nahrungsmittelprodukt nach einem der vorhergehenden Ansprüche, dadurch gekennzeichnet, daß es zusätzlich Vitamine, Mineralstoffe, Geschmacksstoffe und/oder Füllstoffe enthält.

5. Flüssiges Nahrungsmittelprodukt nach einem der vorhergehenden Ansprüche, dadurch gekennzeichnet, daß es mittels einer Milchsäurebakterienkultur bis zu einem pH-Wert von 3,5 bis 5,0 fermentiert ist.

6. Flüssiges Konzentrat mit Fetten mit mindestens 40 Gew.-% an mehrfach ungesättigten Fettsäuren und Lactose und Proteinen in einem Gewichtsverhältnis zwischen 0,3 und 1,0, dadurch gekennzeichnet, dass ein flüssiges Nahrungsmittelprodukt nach einem der Ansprüche 1 bis 5 durch Verdünnung von diesem flüssigen Konzentrat erhalten wird.

7. Verfahren zur Herstellung eines flüssigen Nahrungsmittelprodukts nach einem der vorhergehenden Ansprüche, dadurch gekennzeichnet, daß ein oder mehrere flüssige(s) Milch- und/oder Molkenprodukt (e) mit Wasser auf den gewünschten Lacosegehalt verdünnt wird (werden), nachher bis zum Erreichen des gewünschten Proteingehalts Caseinate zugegeben werden, die sonstigen Bestandteile, wie Fette, Füllstofe, Nährstoffe und Geschmacksstoffe hinzugefügt werden und das erhaltene Gemisch in einer für Milchprodukte üblichen Weise homogenisiert und abgefüllt gegebenenfalls nach einer Fermentation mit Milchsäurebakterien sterilisiert wird.

8. Verfahren zur Herstellung eines flüssigen Nahrungsmittelprodukts nach einem der Ansprüche 1 bis 6, dadurch gekennzeichnet, daß ein oder mehrere pulverförmige(s) Milch- und/oder Molkenprodukt(e) in Wasser bis zum gewünschten Lactosegehalt gelöst wird (werden), danach bis zum Erreichen des gewünschten Proteingehalts Caseinate zugesetzt werden, die sonstigen Bestandteile, wie Fette, Füllstoffe, Nährstoffe und Geschmacksstoffe hinzugefügt werden und das erhaltene Gemisch in einer für Milchprodukte üblichen Weise homogenisiert und abgefüllt und gegebenenfalls nach einer Fermentation mit Milchsäurebakterien sterilisiert wird.

## Revendications

1. Un produit alimentaire liquide à base de produits laitiers pour chats, caractérisé en ce que le produit comprend de 1,5 à 3,5% en poids de lactose et de 3,5 à 5,0% en poids de protéines par rapport au produit total ainsi que de la matière grasse qui comprend au moins 40% en poids d'acides gras poly-insaturés.

2. Un produit alimentaire liquide selon la revendication 1, caractérisé en ce que la teneur en lactose de ce produit est comprise entre 2,0 et 3,0% en poids.

3. Un produit alimentaire liquide selon l'une des revendications précédentes, caractérisé en ce que la protéine est composée de caséine, de caséinate et/ou de protéines de lactosérum.

4. Un produit alimentaire liquide selon l'une des revendications précédentes, caractérisé en ce que ce produit comprend également des vitamines, des minéraux, des agents de sapidité et/ou des agents de remplissage.

5. Un produit alimentaire liquide selon l'une des revendications précédentes, caractérisé en ce que le produit est fermenté au moyen d'une culture bactériologique d'acide lactique jusqu'à un pH de 3,5 à 5,0.

6. Un produit liquide concentré comprenant de la matière grasse contenant au moins 40% en poids d'acides gras poly-insaturés, de lactose et de protéine avec un rapport en poids compris entre 0,3 et 1,0, caractérisé en ce qu'un produit alimentaire liquide selon l'une des revendications 1 à 5 est obtenu en diluant ledit produit liquide concentré.

7. Un procédé pour la préparation d'un produit alimentaire liquide selon l'une des revendications précédentes, caractérisé en ce qu'un ou plusieurs produits liquides du type lait et/ou lacotosérum sont dilués avec de l'eau jusqu'à ce qu'on obtienne la teneur en lactose souhaitée, après quoi les caséinates sont ajoutés jusqu'à ce qu'on obtienne la teneur en protéines souhaitée, les autres ingrédients tels que la matière grasse, les agents de rempeissage, les éléments nutritifs et les agents de sapidité sont ajoutés le mélange qui en résulte est homogénéisé et est completé de la façon habituellement utilisée pour les produits laitiers et stérilisé, optionnellement après fermentation avec des bactéries d'acide lactique.

8. Un procédé pour la préparation d'un produit alimentaire liquide selon l'une des revendications 1 à 6, caractérisé ce qu'un ou plusieurs produits broyés du type lait et/ou lactosérum sont dissous dans de l'eau jusqu'à ce qu'on obtienne la teneur en lactose souhaitée, après quoi les caséinates sont ajoutés jusqu'à ce qu'on obtiene la teneur en protéine souhaitée, les autres ingrédients tels que la matière grasse, les agents de remplissage, les éléments nutritifs et les agents de sapidité sont ajoutés, le mélange qui en résulte est homogénéisé et est completé de la façon habituellement utilisée pour les produits laitiers et stérilisé, optionnellement après fermentation avec des bactéries lactiques.